(19) Europäisches Patentamt
European Patent Office
Office européen des brevets

(11) Numéro de publication: **0 005 678**
**B1**

(12) **FASCICULE DE BREVET EUROPEEN**

(45) Date de publication du fascicule de brevet: **25.11.81**

(51) Int. Cl.$^3$: **C 08 L 27/06,** C 08 K 5/09, C 08 K 5/07, C 08 K 5/34

(21) Numéro de dépôt: **79420021.2**

(22) Date de dépôt: **27.04.79**

(54) **Compositions à base de PVC stabilisées thermiquement.**

(30) Priorité: **12.05.78 FR 7815156**

(43) Date de publication de la demande:
**28.11.79 Bulletin 79/24**

(45) Mention de la délivrance du brevet:
**25.11,81 Bulletin 81/47**

(84) Etats Contractants Désignés:
**BE CH DE FR GB IT LU NL SE**

(56) Documents cités:
**FR - A - 2 239 496**
**FR - A - 2 297 227**

(73) Titulaire: **RHONE-POULENC INDUSTRIES**
**22, avenue Montaigne**
**F-75008 Paris (FR)**

(72) Inventeur: **Torloting, Jean-Claude**
**11, rue de la Colline**
**F-04600 Saint-Auban (FR)**

(74) Mandataire: **Perret, Michel et al,**
**RHONE-POULENC INDUSTRIES Centre de Recherches des Carrières Service Brevets**
**F-69190 Saint-Fons (FR)**

**EP 0 005 678 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Compositions à base de PVC stabilisées thermiquement

La présente invention a pour objet des compositions stabilisées thermiquement à base de chlorure de polyvinyle destinées notamment à l'obtention d'objets conformés transparents.

Dans la demande française 2297227 il a été revendiqué l'emploi de composés $\beta$-dicétoniques conjointement avec des sels organiques de métaux pour stabiliser des compositions à base de polymère de chlorure de vinyle.

Il est connu par ailleurs que l'on peut stabiliser le PVC destiné entre autre à l'obtention de corps creux par extrusion-soufflage au moyen de 0,2 à 1,5% environ en poids par rapport au polymère d'au moins un 2,6-diméthyl 3,5-dicarboxylate 1,4-dihydropyridine (demande française 2239496).

Il a maintenant été trouvé un effet de synergie entre les composés $\beta$-dicétoniques et les dihydropyridines substituées qui permet d'obtenir une stabilisation encore améliorée avec des quantités réduites de ces stabilisants.

Il a plus précisément été trouvé des compositions à base de polymère de chlorure de vinyle stabilisées par l'emploi de sels métalliques et plus particulièrement de l'un des couples de sels organiques des métaux suivants: Ca—Zn, —Cd, Ba—Zn ou Ba—Cd, caractérisées en ce que l'on ajoute comme stabilisant thermique au moins un composé organique $\beta$-dicétonique de formule générale

$$R_1-CO-CH\ R_3-CO-R_2$$

et une dihydropyridine substituée de formule générale

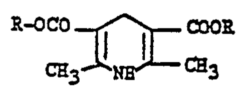

dans lesquelles R est un radical alkyle, alicylique ou phényle, $R_1$ et $R_2$, qui peuvent être identiques ou différents, représentent:

— un radical alkyle ou alcényle linéaire ou ramifié, ayant jusqu'à 36 atomes de carbone,
— un radical aralkyle ayant de 7 à 36 atomes de carbone,
— un radical aryle ou cycloaliphatique ayant moins de 14 atomes de carbone, les radicaux cycloaliphatiques pouvant éventuellement comporter une liaison double carbone-carbone.

Ces radicaux peuvent être substitués ou non, par exemple par des atomes d'halogènes ou pour les radicaux aryles ou cycloaliphatiques, par des radicaux méthyle ou éthyle; ils peuvent aussi être modifiés par la présence d'un ou plusieurs enchaînements

$$-O-,\quad -\underset{\underset{O}{\|}}{C}-O-,\quad -CO-,$$

dans la chaîne aliphatique; ils peuvent représenter ensemble un radical alcoylène divalent de 2 à 5 atomes de carbone, comportant éventuellement un atome d'oxygène ou d'azote.

Les radicaux représentés par les symboles $R_1$, $R_2$ sont en outre tels, que:

— pour $R_1$ et $R_2$ l'atome de carbone lié au groupement carbonyle est exempt d'insaturation éthylénique ou carbonyle,
— pour $R_1$ ou $R_2$ l'atome de carbone lié au groupement carbonyle est exempt d'insaturation aromatique.

L'un des radicaux $R_1$ ou $R_2$ peut représenter un atome d'hydrogène.

$R_3$ est un atome d'hydrogène ou un groupement —CO—X, X représentant un radical $R_1$ tel que défini plus haut ou un radical —NH—Y, Y étant un radical aryl substitué ou non.

Par composition à base de chlorure de polyvinyle, on entend des compositions contenant un homopolymère ou un copolymère de chlorure de vinyle et divers adjuvants couramment utilisés pour faciliter la mise en oeuvre ou pour apporter des propriétés particulières à l'objet façonné.

Tout type d'homopolymère de chlorure de vinyle peut convenir quel que soit son mode de préparation: polymérisation en masse, en suspension, en dispersion ou de tout autre type, et quelle que soit sa viscosité intrinsèque.

De nombreux copolymères de chlorure de vinyle peuvent également être stabilisés contre les effets de la chaleur par des moyens identiques à ceux utilisés pour les homopolymères. Ils comprennent par exemple des copolymères obtenus par copolymérisation du chlorure de vinyle avec d'autres monomères présentant une liaison éthylénique polymérisable, par exemple le chlorure de vinylidène, l'éthylène, les esters acryliques, le styrène, les esters vinyliques, l'acide ou l'anhydride maléique, les esters maléiques.

Les copolymères contiennent habituellement au moins 50% en poids de chlorure de vinyle.

Toutefois le procédé selon l'invention s'applique particuliérement bien aux copolymères contenant au moins 80% en poids de chlorure de vinyle et dont l'autre monomère est l'acétate de vinyle, le chlorure de vinylidène.

Les homopolymères ou copolymères peuvent être soit "rigides", soit "flexibles". Lorsqu'on utilise des polymères "rigides" ceux-ci peuvent comprendre des modificateurs de résistance au choc, des pigments et/ou charges, des lubrifiants, etc., en sus de la résine et des stabilisants. Lorsqu'on utilise des polymères "flexibles" ceux-ci peuvent comprendre des plastifiants, des pigments et/ou charges, des lubrifiants, etc...., en sus de la résine et des stabilisants.

Tous les plastifiants habituellement utilisés pour plastifier le PVC peuvent convenir. De tels plastifiants sont décrits dans "Encyclopedia of Polymer Science and Technology", volume 14, pages 396 à 400, Edition: Interscience Publishers de 1964. On utilise généralement une quantité de plastifiant comprise entre 5 et 60% en poids par rapport au polymère.

Des antioxydants, des stabilisants "lumière" ou UV peuvent aussi être ajoutés dans les compositions.

Les stabilisants constitués de sels organiques de métaux utilisés dans les formulations selon l'invention sont essentiellement des sels de calcium, baryum, zinc ou cadmium d'acides organiques aliphatiques ou d'acides gras, saturés ou non, substitués ou non, ou aromatiques.

Parmi les sels couramment utilisés on peut citer les acétates, les diacétates, les stéarates, les oléates, les laurates, les palmitates, les benzoates, les hydroxystéarates, les éthyl-2 hexanoates, les phenates.

On les emploie sous forme de couples tels que: calcium/zinc, baryum/cadmium, calcium/cadmium ou baryum/zinc, dans des proportions comprises entre 0,01 et 5% en poids par rapport au polymère et de préférence entre 0,1 et 2% en poids.

Ces couples de sels métalliques peuvent être éventuellement associés à un mercaptide d'organoétain.

Il est également possible d'ajouter aux stabilisants d'autres composés organiques connus par leur action stabilisante, tels que par exemple les alcoyl- ou arylphosphites et/ou les dérivés époxydes comme par exemple les huiles de soja époxydées et/ou des polyols.

Tous les polyols peuvent convenir. Toutefois on préférera des composés aliphatiques ayant au moins 2, et de préférence 4, groupements hydroxyles. Les composés cyclaniques qui comportent comme substituants au moins deux fonctions alcool primaire peuvent aussi convenir.

On obtient des résultats particulièrement intéressants avec les polyols suivant: D-Xylitol — D-Sorbitol, D-Mannitol — diglycerol — (4-hydroxy 3,3,5,5-tétrahydroxyméthyl-tétrahydrofuranne) — isocyanurate de trihydroxyéthyle — alcool polyvinylique — triméthylolpropane — triméthylolpropane-tétraméthylolcyclohexanol — acide quinine — adonitol — $\alpha$-méthylglucoside — glycérine. Des quantités comprises entre 0,5% et 2% conduisent à de bons résultats.

Tout composé $\beta$-dicétonique dont l'emploi a été revendiqué dans les demandes françaises 2297227 et 2324681 peut convenir. On obtient des résultats particulièrement intéressants avec le stéaroylbenzoylméthane ou la benzoylacétone. On les emploie dans des proportions comprises entre 0,005 et 2% et de préférence entre 0,05 et 1% en poids par rapport au polymère.

Parmi les composés dihydropyridines substitués, on retiendra les composés revendiqués dans la demande française 2239494 et plus précisément les composés dans lesquels R est un radical alkyl ayant de 2 à 20 atomes de carbone. Les composés dans lesquels R est un radical alkyl ayant de 8 à 14 atomes de carbone conduisent à des résultats particulièrement intéressants en liaison avec les composés $\beta$-dicétonique mentionnés ci-dessus. On les emploie dans des proportions comprises entre 0,005 et 2% et de préférence entre 0,05 et 0,5% en poids par rapport au polymère.

La préparation des compositions selon l'invention peut être faite par tout procédé connu. Les différents stabilisants peuvent être mélangés au plastifiant, soit individuellement, soit après avoir été mélangés entre eux, puis incorporés dans le polymère. Toutes les méthodes usuelles connues dans ce domaine peuvent convenir pour réaliser le mélange des ingrédients. Toutefois l'homogénéisation de la composition peut avantageusement être faite au moyen d'un malaxeur ou d'un mélangeur à rouleaux et on peut opérer à une température telle que la masse soit fluide, ce qui facilite le mélange. Cette température peut être par exemple de l'ordre de 100°C.

Les compositions peuvent être mise en oeuvre selon toutes les techniques habituellement utilisées pour travailler les compositions de PVC, par exemple par extrusion, par injection, par calandrage, par moulage, par rotation, par embouage ou par dépôt sur un support antiadhérent ou non, par extrusion soufflage.

L'association d'un stabilisant $\beta$-dicétonique et d'un composé dihydropyridine substitué conduisant à un effet de synergie, permet de diminuer les quantités de ces stabilisants à mettre en oeuvre tout en cumulant les effets positifs des deux types de stabilisants, à savoir absence de coloration initiale due à une dégradation lors de la mise en oeuvre de la formulation, persistance de cette absence de coloration initiale et stabilité thermique améliorée en cas de traitement thermique soit de la matière non conformée soit de l'objet fini.

Exemple 1 à 8

On prépare une composition A pouvant être notamment utilisées pour l'extrusion-soufflage de bouteille et constituée par:

— 100 parties en poids d'un chlorure de polyvinyle en poudre ayant un indice de viscosité de 80 (norme NF T 51 013) obtenu par polymérisation en suspension dans l'eau
— 10 parties en poids d'un agent renforçateur de choc qui est un copolymère de butadiène, de styrène et de méthacrylate de méthyle
— 1 partie en poids d'un copolymère acrylique (processing aid)
— 3 parties d'huile de soja époxydée
— 0,05 partie d'un stéarate de zinc
— 0,1 partie d'un stéarate de calcium
— 0,1 partie de pigment bleu

A 100 g de la composition A on ajoute diverses quantités en gramme de stéaroylbenzoylméthane (SBM), de diméthyl-2,6 di(lauryloxycarbonyl)-3,5 dihydro-1,4 pyridine (DHP) et de stéarate de calcium (SCa) et on met en oeuvre durant 5 minutes à 180°C sur un malaxeur à cylindre les nouvelles compositions obtenues.

On prélève des échantillons dans la feuille obtenue (de 2,5 mm d'épaisseur) que l'on place pendant des temps variables dans une presse chauffée à 185°C. On note le temps mis par l'échantillon qui était incolore et transparent pour devenir noir (ce temps est une façon de mesurer la stabilité thermique de la composition: il est appelé temps de claquage).

On note par ailleurs la coloration des différents échantillons comparativement à une gamme étalon non normalisée qui va de 0 à 20, l'échantillon noté 0 étant bleuté et transparent (cristal) et l'échantillon moté 20 étant noir et opaque en passant par toute la gamme de couleurs jaunes puis brunes de plus en plus foncées.

Cette gamme étalon est déduite de l'échelle GARDNER utilisée avec un disque comparateur LOVIBOND, la coloration initiale étant légèrement bleutée (présence de colorant bleu) et non absolument incolore.

On obtient les résultats suivants:

| | Temps en mn du traitement thermique à 185°C | | | 0 | 10 | 20 | 30 | 40 | 50 | 60 |
|---|---|---|---|---|---|---|---|---|---|---|
| | Stabilisants ajoutés | | | | | | | | | |
| Ex. | SBM | DHP | Sca | | | | | | | |
| 1 | 0 | 0,4 | 0 | 4 | 5 | 7 | 13 | noir | | |
| 2 | 0 | 0,4 | 0,2 | 8 | 11 | 11 | 11 | 15 | 19 | noir |
| 3 | 0,4 | 0 | 0 | 2 | 12 | 16 | 18 | noir | | |
| 4 | 0,4 | 0 | 0,2 | 2 | 7 | 12 | 14 | 17 | 18 | noir |
| 5 | 0,2 | 0,1 | 0 | 2 | 3 | 10 | 16 | noir | | |
| 6 | 0,2 | 0,1 | 0,2 | 2 | 4 | 7 | 13 | 17 | 18 | noir |
| 7 | 0,1 | 0,2 | 0 | 2 | 4 | 7 | 16 | noir | | |
| 8 | 0,1 | 0,2 | 0,2 | 3 | 5 | 8 | 16 | 17 | 18 | noir |

On constate d'après les résultats de ce test très sévère que l'addition de stéarate de calcium permet d'allonger de 20 minutes le temps de claquage (temps où l'échantillon devient noir).

On constate surtout que l'on obtient des résultats globalement de même ordre en remplaçant 04% de composés $\beta$-dicétoniques ou dihydropyridinique par respectivement 0,2 et 0,1% ou 0,1 et 0,2% de ces composés, ce qui se traduit par une diminution de 25% en poids de ces stabilisants. On notera que pendant le 10 premières minutes, ce qui correspond à une durée habituelle de mise en oeuvre de la composition dans les machines, la stabilisation est nettement améliorée en utilisant le mélange des deux stabilisants organiques.

Exemple 9

On prépare une composition B ayant la composition suivante:

| | |
|---|---|
| — chlorure de polyvinyle (comme à l'exemple 1) | 100 parties |
| — agent renforçateur (comme á l'exemple 1) | 10 parties |
| — huile de soja époxydée | 4 parties |
| — stéarate de calcium | 0,2 partie |
| — stéarate de zinc | 0,2 partie |

On ajoute à 100 parties de la composition B un système stabilisant comprenant:

— 0,25 partie de stéaroylbenzoylméthane
— 0,20 partie de diméthyl-2,6 di(lauryloxycarbonyl)-3,5 dihydro-1,4 pyridine,
— 0,2 partie de stéarate de calcium.

Ce mélange a une stabilité thermique (temps de claquage) déterminé à la presse à 185°C selon les exemples précédents de 90 minutes.

On effectue l'extrusion-soufflage de bouteille avec ce mélange. Les bouteilles obtenues qui sont incolores sont broyées et les déchets obtenus sont à nouveau utilisés en extrusion-soufflage pour donner des bouteilles. On effectue ainsi 8 passages successifs de la même quantité de mélange stabilisé.

On constate qu'au fur et à mesure des passages la teinte n'évolue que très peu et ce n'est qu'au cinquième passage que les bouteilles prennent une coloration jaunâtre.

Pour obtenir le même effet sur la coloration des bouteilles on doit remplacer le système stabilisant ci-dessus par 0,7 partie de stéaroylbenzoylméthane et 0,2 partie de stéarate de calcium. Dans ce cas on a également une stabilité thermique de 90 minutes.

Pour obtenir le même effet sur la coloration des bouteilles il est nécessaire de remplacer le système stabilisant ci-dessus par 0,7 partie de diméthyl-2,6 di(lauryloxycarbonyl)-3,5 dihydro-1,4 pyridine. Toutefois dans ce cas, la stabilité thermique (temps de claquage) n'est plus que de 60 minutes et les bouteilles obtenues à partir de la composition initiale sont un peu plus colorées.

Il est nécessaire d'ajouter encore 0,2 parties de stéarate de calcium pour faire remonter le stabilité thermique (temps de claquage) à 90 minutes et dans ce cas les bouteilles obtenues par extrusion-soufflage sont nettement plus colorées dès la première opération.

Exemple 10 à 15

On prépare une composition C de la même façon que la composition A (exemple 1) avec les constituants suivants (de même nature que ceux de l'exemple 1)

— 100 parties en poids de chlorure de polyvinyle
— 10 parties en poids de renforçateur choc
— 1 partie de lubrifiant (ester de colophane)
— 4 parties d'huile de soja époxydée
— 0,2 parties de stéarate de calcium
— 0,2 parties de stéarate de zinc

A 57,5 g de la composition B on ajoute diverses quantités en grammes de benzoylacétone (BA), de diméthyl-2,6 di(éthoxycarbonyl)-3,5 dihydro-1,4 pyridine (DHPE) et de stéarate de calcium (SCa). On met en oeuvre durant 3 minutes à 180°C sur un malaxeur à cylindre les nouvelles compositions obtenues. On obtient une feuille de 2,5 mm d'épaisseur dans laquelle on prélève des échantillons que l'on place en étuve ventillée à 180°C pendant des temps variables.

On note l'évolution de la coloration des échantillons selon l'échelle normalisée GARDNER au moyen d'un disque LOVIBOND. On note par ailleurs le temps de claquage (échantillon devenu noir). On obtient les résultats suivants:

| Ex. | Temps en mn du traitement thermique à 180°C / stabilisants ajoutés: BA | DHPE | SCa | 0 | 7 | 14 | 21 | 30 | 40 | 50 | temps de claquage |
|---|---|---|---|---|---|---|---|---|---|---|---|
| 10 | | 0,3 | | 0,5 | 1,5 | 2 | 3 | 3,5 | 5 | noir | |
| 11 | | 0,3 | 0,2 | 1,5 | 2,5 | 3 | 3,5 | 4 | 5 | 6 | 74 min. |
| 12 | 0,3 | | | 0 | 0 | 1 | 3,5 | 5 | 6 | 8 | 55 min. |
| 13 | 0,3 | | 0,2 | 0 | 0 | 1,5 | 3 | 5 | 6 | 7 | >80 min. |
| 14 | 0,15 | 0,1 | | 0 | 0 | 1 | 2,5 | 4 | 6 | 8 | 57 min. |
| 15 | 0,15 | 0,1 | 0,2 | 0 | 0 | 1 | 2 | 4 | 6 | 6 | >80 min. |

On constate l'influence de stéarate de calcium qui permet d'allonger le temps de claquage. Mais on observe surtout que l'emploi simultané de plus petites quantités de benzoyl acétone et de diméthyl-diéthylcarboxylate dihydropyridine permet d'améliorer, du moins jusqu'à 30 minutes, la stabilisation thermique par rapport à l'emploi de chacun des stabilisants organiques utilisé seul.

Exemple 16 à 25

On prépare une composition D comme indiqué précédemment ayant la composition suivante:

| | |
|---|---|
| — chlorure de polyvinyle | 100 parties |
| — agent renforçateur choc | 10 parties |
| — Cire E | 1 partie |
| — Huile de soja époxydée | 4 parties |
| — Stéarate de zinc | 0,2 partie |
| — Ethyl-2 hexanoate de calcium | 0,4 partie |

On utilise comme stabilisants organiques

— de l'acétyl méthylhepténone (AMH)
— du paraméthoxybenzoylstéaroylméthane (PMBS)
— du N-phénylcarbamoyl-3- benzoyl-3 acétone (PCBA) de formule

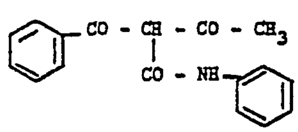

On obtient les résultats suivants:

| Temps en mn du traitement thermique à 180°C | | | 0 | 7 | 14 | 21 | 30 | 40 | 50 | temps de claquage |
|---|---|---|---|---|---|---|---|---|---|---|
| composition témoin D stabilisants ajoutés | | | 6 | 8 | 8 | 9 | 9 | 10 | 11 | >80 mn |
| | DHPE | AMH | | | | | | | | |
| EX. 16 | | 0,3 | 0 | 0 | 1,5 | 3 | 4 | 5 | 7 | 80 mn |
| 17 | 0,3 | | 1,5 | 2,5 | 3 | 3,5 | 4 | 5 | 6 | >80 mn |
| 18 | 0,1 | 0,15 | 0 | 0 | 1 | 2,5 | 3,5 | 4 | 6 | 70 mn |
| 19 | 0,15 | 0,1 | 0,5 | 2 | 3 | 4 | 4,5 | 5 | 8 | >80 mn |
| | | PCBA | | | | | | | | |
| 20 | | 0,3 | 1 | 1,5 | 3 | 4 | 4,5 | 7 | 10 | 80 mn |
| 21 | 0,3 | | 1,5 | 2,5 | 3 | 3,5 | 4 | 5 | 6 | >80 mn |
| 22 | 0,1 | 0,15 | 0 | 0 | 1 | 2,5 | 3 | 4 | 6 | >80 mn |
| | DHP | PMBS | | | | | | | | |
| 23 | | 0,4 | 0 | 0,5 | 1,5 | 3 | 4 | 5 | 6 | 70 mn |
| 24 | 0,4 | | 2 | 3 | 4 | 4 | 5 | 5 | 6 | 80 mn |
| 25 | 0,1 | 0,2 | 0 | 0 | 1 | 2,5 | 3 | 4,5 | 6 | >80 mn |

Exemple 26 à 28

On prépare une composition E comme indiqué précédemment avec la composition suivante

| | |
|---|---|
| — chlorure de polyvinyle | 100 parties |
| — agent renforçateur choc | 10 parties |
| — Cire E | 1 partie |
| — Huile de soja époxydée | 4 parties |
| — Stéarate de baryum | 0,4 partie |
| — Stéarate de zinc | 0,2 partie |

On utilise comme stabilisants organiques la stéaroylacétone (SA) et la diméthyldi(lauryloxycarbonyl)-dihydropyridine (DHP)

On obtient les résultate suivants:

| Temps en mn du traitement thermique à 180°C | | | 0 | 7 | 14 | 21 | 30 | 40 | 50 | temps de claquage |
|---|---|---|---|---|---|---|---|---|---|---|
| Composition témoin E stabilisants ajoutés | | | 9 | 11 | 11 | 11 | 11 | 11 | 10 | 65 mn |
| | DHP | SA | | | | | | | | |
| Ex. 26 | | 0,4 | 0 | 1 | 1,5 | 2 | 2,5 | 3,5 | 5 | 65 mn |
| Ex. 27 | 0,4 | | 1 | 3 | 4,5 | 5 | 5 | 6 | 6 | 65 mn |
| Ex. 28 | 0,1 | 0,2 | 0 | 1,5 | 2,5 | 3 | 3 | 4 | 5 | 65 mn |

On constate que la synergie entre les 2 composés organiques est moins nette en remplaçant les sels de calcium par des sels de baryum. Elle existe toutefois mais à un degré moindre.

Exemple 29 à 31

On prépare une composition F comme indiqué précédemment avec la composition suivante:

- — chlorure de polyvinyle — 100 parties
- — agent renforçateur choc — 10 parties
- — Cire E — 1 partie
- — Huile de soja époxydée — 4 parties
- — paratertiobutylbenzoate de zinc — 1,2 parties
- — stéarate de calcium — 4 parties

On utilise comme stabilisants organiques le lauryl-stéaroylméthane (LSM) et la diméthyldi-(lauryloxycarbonyl)-dihydropyridine (DHP)

On obtient les résultats suivants:

| Temps en mn du traitement thermique à 180°C | | | 0 | 7 | 14 | 21 | 30 | 40 | 50 | temps de claquage |
|---|---|---|---|---|---|---|---|---|---|---|
| composition témoin F stabilisants ajoutés | | | 6 | 7 | 7 | 8 | 9 | 9 | 10 | 80 mn |
| | LSM | DHP | | | | | | | | |
| Ex. 29 | 0,5 | | 0 | 0 | 1 | 2,5 | 4 | 4,5 | 7 | >80 mn |
| Ex. 30 | | 0,5 | 2 | 3 | 4 | 4 | 4,5 | 5 | 5,5 | 70 mn |
| Ex. 31 | 0,3 | 0,1 | 0 | 0 | 0,5 | 2 | 3 | 4,5 | 5,5 | 80 mn |

**Revendications**

1. Compositions à base de polymère de chlorure de vinyle stabilisées thermiquement par emploi de sels métalliques et plus particulièrement de l'un des couples de sels organiques des métaux suivants: Ca—Zn, Ca—Cd, Ba—Zn ou Ba—Cd caractérisées en ce que l'on ajoute au système stabilisant au moins un composé organique B-dicétonique de formule générale

$$R_1—CO—CH\ R_3—CO—R_2$$

et au moins une dihydropyridine substituée de formule générale

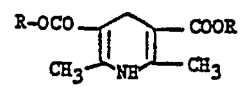

dans lesquelles R est un radical alkyle, alicyclique ou phényl, $R_1$ et $R_2$, qui peuvent être identiques ou différents, représentent:

— un radical alkyle ou alcényle linéaire ou ramifié, ayant jusqu'à 36 atomes de carbone,

— un radical aralkyle ayant de 7 à 36 atomes de carbone,

— un radical aryle ou cycloaliphatique ayant moins de 14 atomes de carbone, les radicaux cycloaliphatiques pouvant éventuellement comporter une liaison double carbone-carbone.

Ces radicaux peuvent être substitués ou non, par exemple par des atomes d'halogènes ou pour les radicaux aryle ou cycloaliphatiques, par des radicaux méthyle ou éthyle; ils peuvent aussi être modifiés par la présence d'un ou plusieurs enchaînements

$$—O—,\ —\underset{\underset{O}{\|}}{C}—O—,\ —CO—,$$

dans la chaîne aliphatique; ils peuvent représenter ensemble un radical alcoylène divalent de 2 à 5 atomes de carbone, comportant éventuellement un atome d'oxygène ou d'azote.

Les radicaux représentés par les symboles $R_1$, $R_2$ sont en outre tels, que:

— pour $R_1$ et $R_2$ l'atome de carbone lié au groupement carbonyle est exempt d'insaturation éthylénique ou carbonyle,

— pour $R_1$ ou $R_2$ l'atome de carbone lié au groupement carbonyle est exempt d'insaturation aromatique.

L'un des radicaux $R_1$ ou $R_2$ peut représenter un atome d'hydrogène.

$R_3$ est un atome d'hydrogène ou un groupement —CO—X, X représentant un radical $R_1$ tel que défini plus haut ou un radical —NH—Y, Y étant un radical aryl substitué ou non.

2. Compositions selon la revendication 1, caractérisées en ce que l'on ajoute de 0,05 à 1% en poids par rapport au polymère de composé $\beta$ dicétonique et de 0,05 à 1% en poids du composé dihydropyridine substituée.

3. Compositions selon la revendication 1, caractérisées en ce que R est un radical alcoyle ayant de 2 à 14 atomes de carbone.

4. Compositions selon la revendication 3, caractérisées en ce que la dihydropyridine est une diméthyl-2,6 di(éthoxycarbonyl)-3,5 dihydro-1,4 pyridine ou une diméthyl-2,6 di-(lauryloxycarbonyl)-3,5 dihydropyridine-1,4.

5. Compositions selon la revendication 1, caractérisées en ce que les composés $\beta$-dicétoniques sont choisis parmi la benzoylacétone, la stéaroylacétone ou le stéaroylbenzoylméthane.

6. Produits conformés obtenus à partir des compositions selon les revendications 1 à 5.

**Patentansprüche**

1. Zusammensetzungen auf Basis von Vinylchloridpolymerem, welche durch Verwendung von Metallsalzen und insbesondere von einem der Paare organischer Salze folgender Metalle: Ca—Zn, Ca—Cd, Ba—Zn oder Ba—Cd thermisch stabilisiert sind, dadurch gekennzeichnet, daß man dem stabilisierenden System mindestens eine organische $\beta$-diketonische Verbindung der allgemeinen Formel

$$R_1—CO—CH\ R_3—CO—R_2$$

und mindestens ein substituiertes Dihydropyridin der allgemeinen Formel

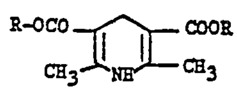

zufügt, worin R ein Alkyl-, alicyclischer oder Phenylrest ist, $R_1$ und $R_2$, welche identisch oder verschieden sein können, bedeuten:

— einen linearen oder verzweigten Alkyl- oder Alkenylrest mit bis zu 36 Kohlenstoffatomen,
— einen Aralkylrest mit 7 bis 36 Kohlenstoffatomen,
— einen Aryl- oder cycloaliphatischen Rest mit weniger als 14 Kohlenstoffatomen, wobei die cycloaliphatischen Reste gegebenenfalls eine Kohlenstoff-Kohlenstoff-Doppelbindung tragen können.

Diese Reste können substituiert oder nicht substituiert sein, beispielsweise durch Halogenatome oder für die Aryl- oder cycloaliphatischen Reste durch Methyl- oder Äthylreste; sie können auch durch die Anwesenheit einer oder mehrerer Verkettungen

$$—O—,\ —\underset{\underset{O}{\|}}{C}—O—,\ —CO—$$

in der aliphatischen Kette modifiziert sein; sie können zusammen einen zweiwertigen Alkylenrest mit 2 bis 5 Kohlenstoffatomen, der gegebenenfalls ein Sauerstoff- oder Stickstoffatom trägt, bedeuten.

Die durch die Symbole $R_1$ und $R_2$ wiedergegebenen Reste sind im übrigen so, daß

— für $R_1$ und $R_2$ das an die Carbonylgruppe gebundene Kohlenstoffatom frei von äthylenischer oder Carbonylungesättigtheit ist,
— für $R_1$ oder $R_2$ das an die Carbonylgruppe gebundene Kohlenstoffatom frei von aromatischer Ungesättigtheit ist.

Einer der Reste $R_1$ oder $R_2$ kann ein Wasserstoffatom bedeuten.

$R_3$ ist ein Wasserstoffatom oder eine Gruppe —CO—X, wobei X einen Rest $R_1$ bedeutet, wie er oben definiert ist oder einen Rest —NH—Y, wobei Y ein substituierter oder nicht substituierter Arylrest ist.

2. Zusammensetzungen gemäß Anspruch 1, dadurch gekennzeichnet, daß man 0,05 bis 1 Gew.-% bezogen auf das Polymere an $\beta$-diketonischer Verbindung und 0,05 bis 1 Gew.-% der substituierten Dihydropyridinverbindung zusetzt.

3. Zusammensetzungen gemäß Anspruch 1, dadurch gekennzeichnet, daß R ein Alkylrest mit 2 bis 14 Kohlenstoffatomen ist.

4. Zusammensetzungen gemäß Anspruch 3, dadurch gekennzeichnet, daß das Dihydropyridin ein

2,6-Dimethyl-3,5-di(äthoxycarbonyl)-1,4-dihydropyridin oder ein 2,6-Dimethyl-3,5-di(lauryloxycarbonyl)-1,4-dihydropyridin ist.

5. Zusammensetzungen gemäß Anspruch 1, dadurch gekennzeichnet, daß die $\beta$-diketonischen Verbindungen ausgewählt sind unter Benzoylaceton, Stearoylaceton oder Stearoylbenzoylmethan.

6. Geformte Erzeugnisse erhalten aus den Zusammensetzungen gemäß den Ansprüchen 1 bis 5.

**Claims**

1. Compositions based on vinyl chloride polymer, heat-stabilised by the use of metal salts and more particularly of one of the pairs of organic salts of the following metals: Ca—Zn, Ca—Cd, Ba—Zn or Ba—Cd, characterised in that at least one organic $\beta$-diketone compound of the general formula

$$R_1\text{—CO—CH } R_3\text{—CO—}R_2$$

and at least one substituted dihydropyridine of the general formula

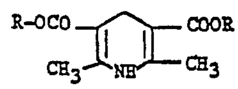

in which formulae R is an alkyl, alicyclic or phenyl radical and $R_1$ and $R_2$, which can be identical or different, represent: a linear or branched alkyl or alkenyl radical having up to 36 carbon atoms, an aralkyl radical having from 7 to 36 carbon atoms or an aryl or cycloaliphatic radical having fewer than 14 carbon atoms, it being possible, if appropriate, for the cycloaliphatic radicals to contain a carbon-carbon double bond, are added to the stabilising system.

These radicals can be unsubstituted or substituted, for example by halogen atoms or, in the case of the aryl or cycloaliphatic radicals, by methyl or ethyl radicals; they can also be modified by the presence of one or more linkages

$$\text{—O—, —}\underset{\underset{O}{\|}}{C}\text{—O— or —CO—}$$

in the aliphatic chain; they can together represent a divalent alkylene radical having 2 to 5 carbon atoms, which, if appropriate, contains an oxygen or nitrogen atom.

The radicals represented by the symbols $R_1$ and $R_2$ are moreover such that: in the case of $R_1$ and $R_2$, the carbon atom bonded to the carbonyl group is free of ethylenic or carbonyl unsaturation, and in the case of $R_1$ or $R_2$, the carbon atom bonded to the carbonyl group is free of aromatic unsaturation.

One of the radicals $R_1$ or $R_2$ can represent a hydrogen atom.

$R_3$ is a hydrogen atom or a group —CO—X, X representing a radical $R_1$ as defined above or a radical —NH—Y, Y being a substituted or unsubstituted aryl radical.

2. Compositions according to Claim 1, characterised in that from 0.05 to 1% by weight, relative to the polymer, of $\beta$-diketone compound is added, and from 0.05 to 1% by weight of the substituted dihydropyridine compound is added.

3. Compositions according to Claim 1, characterised in that R is an alkyl radical having from 2 to 14 carbon atoms.

4. Compositions according to Claim 3, characterised in that the dihydropyridine is a 2,6-dimethyl-3,5-di-(ethoxycarbonyl)-1,4-dihydropyridine or a 2,6-dimethyl-3,5-di-(lauryloxycarbonyl)-1,4-dihydropyridine.

5. Compositions according to Claim 1, characterised in that the $\beta$-diketone compounds are chosen from amongst benzoylacetone, stearoylacetone or stearoylbenzoylmethane.

6. Shaped products obtained from the compositions according to Claims 1 to 5.